# EUROPEAN PATENT APPLICATION

(11) **EP 4 344 351 A1**
(43) Date of publication of application: **27.03.2024**
(21) Application number: 22211000.9
(22) Date of filing: 02.12.2022
(51) Int. Cl.: H05B 45/00, F21S 4/15

(54) **HIGH-VOLTAGE POINT CONTROL LAMP STRING AND WINDOW CURTAIN SYSTEM**

(30) Priority: 26.09.2022 CN 202222551891 U
(71) Applicant: Shangyou Jiayi Lighting Product Co., Ltd., Huangbu Town, Shangyou County Ganzhou City Jiangxi 314000 (CN)
(72) Inventor: HE, Yaowen, Ganzhou City, 341316 (CN)
(74) Representative: Berggren Oy

(57) **Abstract**

The present disclosure provides a high-voltage point control lamp string and a window curtain structure, which include a bracket, and a plurality of lamp beads provided on the bracket, wherein the bracket includes a main line bracket and a lamp string bracket; the main line bracket is provided with a power supply main line and a signal main line; the lamp string bracket is configured to fix the plurality of lamp beads, and the power supply main line is configured to supply power to the plurality of lamp beads; and a lamp body of each of the lamp beads is provided with a signal line, and each of the lamp beads is connected to the signal main line through the signal line, so as to control a light-up state through a control signal of the signal main line. The lamp beads can be connected in series on the main line or in series between the lamp strings, and the number of lamp beads carried can be increased, the current generated is smaller, and the requirements for the wiring harness are lower.

## Description

### Technical Field

The present disclosure relates to the technical field of LED lamp structures, in particular to a high-voltage point control lamp string and a window curtain system.

### Background Art

LED, i.e., light-emitting diode, is a light-emitting device that converts electrical energy to light energy, simultaneously, it has been widely used in urban landscape lighting due to its advantages of energy saving, long service life, and various lamp colors.

The existing high-voltage point control LED lamp strings are generally connected by using 5V-12V lamp strings, simultaneously, the lamp strings are generally connected in parallel and cannot be connected in series. If the number of lamp beads increases, the required current will also be larger, and the requirements for the wires in the lamp string will be higher, thereby resulting in higher cost.

### Summary

In view of this, the purpose of the present disclosure is to provide a high-voltage point control lamp string and a window curtain system, so as to solve the above-mentioned technical problems existing in the prior art.

In the first aspect, the embodiments of the present disclosure provide a high-voltage point control lamp string, which comprises a bracket, and a plurality of lamp beads provided on the bracket, wherein the bracket comprises a main line bracket and a lamp string bracket; the main line bracket is provided with a power supply main line and a signal main line; the lamp string bracket is configured to fix the plurality of lamp beads, and the power supply main line is configured to supply power to the plurality of lamp beads; and a lamp body of each of the lamp beads is provided with a signal line, and each of the lamp beads is connected to the signal main line through the signal line, so as to control a light-up state through a control signal of the signal main line.

Further, the plurality of lamp beads comprise a plurality of first lamp beads and a plurality of second lamp beads; positive and negative pins of the first lamp bead and the second lamp bead are in opposite positions; the plurality of first lamp beads and the plurality of second lamp beads are alternately provided on the lamp string bracket in sequence.

Further, the power supply main line comprises a positive power supply main line and a grounded main line.

Further, the lamp string bracket is provided with a plurality of bonding pads connected in sequence, and the bonding pads are configured to be welded with the lamp beads, wherein a center of each of the bonding pads is provided with a signal point, and the signal point is configured to be connected with the signal line of each of the lamp beads in a contact manner.

Further, each of the bonding pads comprises a positive welding spot connected to the positive power supply main line, and a negative welding spot connected to the grounded main line; and the positive welding spot and the negative welding spot are arranged in a preset manner.

Further, the lamp string bracket comprises a first substrate and a second substrate, and both the first substrate and the second substrate are connected to a frame body of the lamp string bracket; an end of the first substrate protrudes from the frame body to form a positive pin, and an end of the second substrate protrudes from the frame body to form a negative pin; or, the end of the first substrate protrudes from the frame body to form the negative pin, and the end of the second substrate protrudes from the frame body to form the positive pin.

Further, the high-voltage point control lamp string further comprises a transcoding circuit board, and the first substrate and the second substrate are connected with the power supply main line and the signal main line through the transcoding circuit board.

Further, the plurality of lamp beads fixed on the lamp string bracket are connected in series through the first substrate and the second substrate.

Further, the lamp string is a four-wire high-voltage point control lamp string.

In the second aspect, the embodiments of the present disclosure also provide a window curtain structure comprising a plurality of above-mentioned high-voltage point control lamp strings, and the plurality of high-voltage point control lamp strings are connected with each other.

The embodiments of the present disclosure bring the following beneficial effects.

In a high-voltage point control lamp string provided by embodiments of the present disclosure, the high-voltage point control lamp string comprises a bracket, and a plurality of lamp beads provided on the bracket, wherein the bracket comprises a main line bracket and a lamp string bracket; the main line bracket is provided with a power supply main line and a signal main line; the lamp string bracket is configured to fix the plurality of lamp beads, and the power supply main line is configured to supply power to the plurality of lamp beads; and a lamp body of each of the lamp beads is provided with a signal line, and each of the lamp beads is connected to the signal main line through the signal line, so as to control a light-up state through a control signal of the signal main line; the lamp beads can be connected in series on the main line or in series between the lamp strings, and the number of lamp beads carried can be increased, the current generated is smaller, and the requirements for the wiring harness are lower.

Additional features and advantages of the present disclosure will be set forth in the following specification, or some of the features and advantages may be inferred or unequivocally determined from the specification, or may be learned by implementing the above-described techniques of the present disclosure.

In order to make the above-mentioned purposes, features and advantages of the present disclosure more obvious and easier to understand, the preferred embodiments are exemplified below, and are described in detail as follows in conjunction with the drawings.

### Brief Description of Drawings

In order to more clearly illustrate the specific embodiments of the present disclosure or technical solutions in the prior art, drawings which need to be used for description of the specific embodiments or the prior art will be introduced briefly below, and apparently, the drawings in the following description merely show some embodiments of the present disclosure, and those ordinarily skilled in the art still could obtain other drawings in light of these drawings, without using any inventive efforts.
FIG. 1 is a structural schematic view of a window curtain structure provided by an embodiment of the present disclosure;
FIG. 2 is a structural schematic view of a high-voltage point control lamp string provided by an embodiment of the present disclosure;
FIG. 3 is a structural schematic view of a high-voltage point control lamp string performing series connection on a main line provided by an embodiment of the present disclosure;
FIG. 4 is a structural schematic view of another window curtain structure provided by an embodiment of the present disclosure;
FIG. 5 is a structural schematic view of a high-voltage point control lamp string in which each lamp string itself performs series connection provided by an embodiment of the present disclosure; and
FIG. 6 is a structural schematic view of another window curtain structure provided by an embodiment of the present disclosure.

### Reference numerals:

000-bracket; 10-lamp bead; 001-main line bracket; 002-lamp string bracket; 011-power supply main line; 012-signal main line; 013-positive power supply main line; 014-grounded main line; 11-first lamp bead; 12-second lamp bead; 021-signal line; 003-signal point; 004-positive welding spot; 005-negative welding spot; 201-first substrate; 202-second substrate; 400-transcoding circuit board.

### Detailed Description of Embodiments

In order to make the purpose, technical solutions and advantages of the embodiments of the present disclosure clearer, the technical solutions of the present disclosure will be described clearly and completely below in conjunction with the drawings, obviously, the described embodiments are a part of the embodiments of the present disclosure, but not all of the embodiments. Based on the embodiments of the present disclosure, all other embodiments obtained by those ordinarily skilled in the art, without making inventive effort, fall within the protection scope of the present disclosure.

At present, most of the voltages used by the existing point control lamp strings are 5V-12V, and the existing point control lamp strings are generally connected in parallel, and the lamp strings cannot be connected in series, due to the full-parallel method used, the voltage of the power supply used in the circuit is generally relatively low, and if the number of lamp beads carried increases, a relatively large voltage drop will generate, so the required current is also larger, therefore, the wiring harness used has to be thicker, the power supply is also larger, and the cost will increase accordingly.

Based on this, the high-voltage point control lamp string and window curtain structure provided by the embodiments of the present disclosure can solve the above-mentioned technical problems by connecting the lamp beads in series on the main line or connecting the lamp beads in series via the lamp strings.

In order to facilitate the understanding of the present disclosure, the high-voltage point control lamp string and window curtain system will be described more fully below with reference to the related drawings. A preferred embodiment of the high-voltage point control lamp string is shown in the drawings. However, the high-voltage point control lamp string can be achieved in many different forms and is not limited to the embodiments described herein.

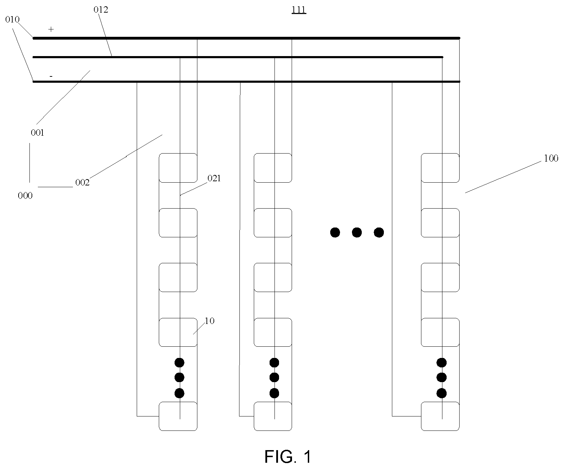

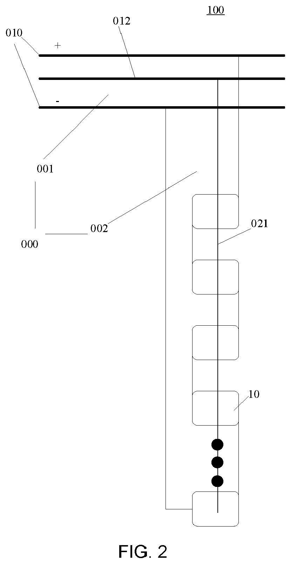

FIG. 1 is a structural schematic view of a window curtain structure 111 provided in this embodiment, and FIG. 2 is a structural schematic view of a high-voltage point control lamp string 100 provided in this embodiment. Referring to FIG. 1 and FIG. 2 in combination, this embodiment provides a high-voltage point control lamp string 100, correspondingly, and provides a window curtain structure 111.

The window curtain structure 111 includes a plurality of high-voltage point control lamp strings 100, and the plurality of high-voltage point control lamp strings 100 are connected with each other to form a curtain-shaped window curtain structure 111.

Referring to a structural schematic view of a high-voltage point control lamp string shown in FIG. 2, the high-voltage point control lamp string comprises a bracket 000, and a plurality of lamp beads 10 provided on the bracket, wherein the bracket 000 comprises a main line bracket 001 and a lamp string bracket 002; the main line bracket 001 is provided with a power supply main line 011 and a signal main line 012;
the lamp string bracket is configured to fix the plurality of lamp beads 10, and the power supply main line 011 is configured to supply power to the plurality of lamp beads 10; and
a lamp body of each of the lamp beads is provided with a signal line 021, and each of the lamp beads 10 is connected to the signal main line through the signal line 021, so as to control a light-up state through a control signal of the signal main line.

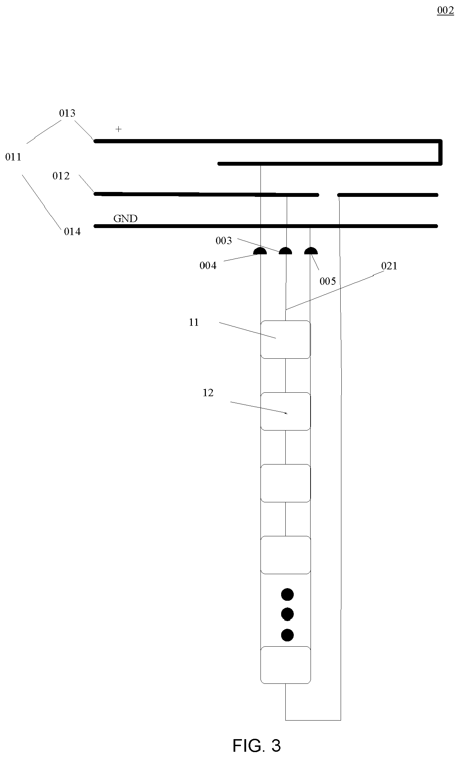

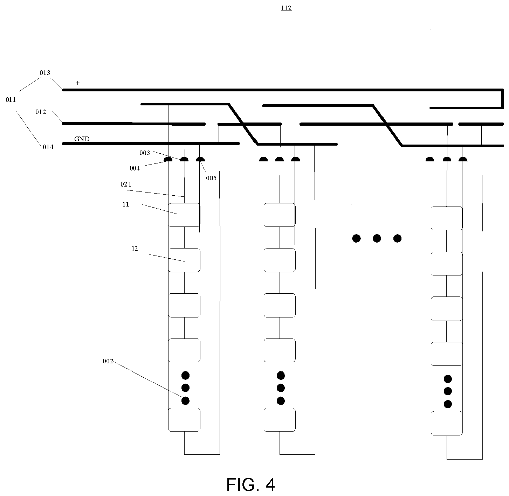

On the basis of the above-mentioned embodiments, FIG. 3 specifically shows a structural schematic view of a high-voltage point control lamp string performing series connection on the main line, and FIG. 4 shows a structural schematic view of another window curtain structure 112 corresponding thereto, as shown in FIG. 3, according to the above-mentioned high-voltage point control lamp string, the lamp beads 10 include a plurality of first lamp beads 11 and a plurality of second lamp beads 12.

In practical applications, this type of high-voltage point control lamp string and window curtain structure thereof are suitable for use scenarios of 36-220V power supply.

Positive and negative pins of the first lamp bead 11 and the second lamp bead 12 are in opposite positions; the plurality of first lamp beads 11 and the plurality of second lamp beads 12 are alternately provided on the lamp string bracket 002 in sequence.

Specifically, the structures of the first lamp bead 11 and the second lamp bead 12 are roughly the same, the difference is that the positive and negative pins of the two types of lamp beads 10 are interchanged in positions, and the structure of the lamp bead is not specifically limited herein.

Specifically, the power supply main line 011 shown in FIG. 4 includes a positive power supply main line 013 and a grounded main line 014.

The lamp string bracket 002 is provided with a plurality of bonding pads connected in sequence, and the bonding pads are configured to be welded with the lamp beads (the specific form of bonding pad is not shown in the figure).

In the above, a center of the bonding pad is provided with a signal point 003, and the signal point 003 is configured to be connected with the signal line 021 of the lamp bead in a contact manner.

Specifically, the above-mentioned bonding pad comprises a positive welding spot 004 connected to the positive power supply main line 013, and a negative welding spot 005 connected to the grounded main line 014; and the positive welding spot 004 and the negative welding spot 005 are arranged in a preset manner.

This manner can make individual lamp strings connected in series by means of performing series connection on the signal main line of the main line, so it can be applied to use scenarios where the voltage is in the range of 36-220V.

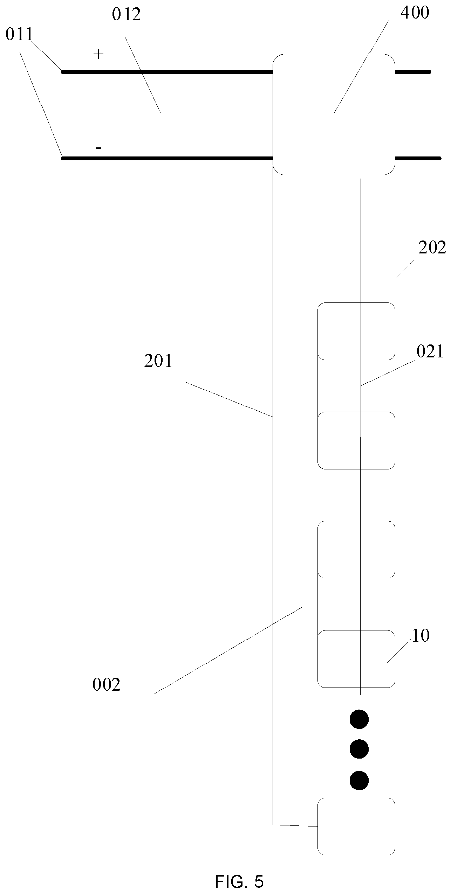

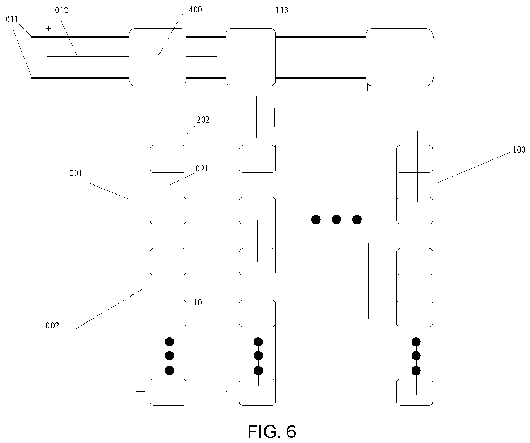

On the basis of the above-mentioned embodiments, FIG. 5 specifically shows a structural schematic view of the high-voltage point control lamp string in which each lamp string itself performs series connection, and FIG. 6 shows a structural schematic view of another window curtain structure 113 corresponding thereto.

In practical applications, this type of high-voltage point control lamp string and window curtain structure thereof are suitable for use scenarios of 12-36V power supply.

Specifically, the lamp string bracket 002 comprises a first substrate 201 and a second substrate 202, and both the first substrate 201 and the second substrate 202 are connected to a frame body of the lamp string bracket 002 (not shown in the figure); an end of the first substrate 201 protrudes from the frame body to form the positive pin, and an end of the second substrate 202 protrudes from the frame body to form the negative pin; or, the end of the first substrate protrudes from the frame body to form the negative pin, and the end of the second substrate protrudes from the frame body to form the positive pin, which are not specifically limited herein.

Correspondingly, the high-voltage point control lamp string further comprises a transcoding circuit board 400, and the first substrate 201 and the second substrate 202 are connected with the power supply main line 011 and the signal main line 012 through the transcoding circuit board 400.

Specifically, the plurality of lamp beads 10 fixed on the lamp string bracket are connected in series through the first substrate 201 and the second substrate 202.

In practical applications, the above-mentioned various forms of lamp strings are all four-wire high-voltage point control lamp strings.

Further, referring to FIG. 1, the embodiments of the present disclosure also provide a window curtain structure 111, which includes a plurality of high-voltage point control lamp strings 100, and the plurality of high-voltage point control lamp strings 100 are connected with each other to form a curtain-shaped window curtain structure 111.

Furthermore, in the description of embodiments of the present disclosure, unless otherwise definitely specified and limited, the terms "mount", "link" and "connect" should be understood in a broad sense, for example, they can be fixed connection, detachable connection or integrated connection; they can be mechanical connection or electrical connection; they can be directly attached or indirectly attached by intermediate medium. Connection can be the internal communication between two components. For those ordinarily skilled in the art, the specific meaning of the above terms in the present disclosure can be understood according to the specific situation.

In the description of the present disclosure, it should be noted orientation or positional relations indicated by terms such as "center", "upper", "lower", "left", "right", "vertical", "horizontal", "inner", and "outer" are based on orientation or positional relations as shown in the drawings, merely for facilitating the description of the present disclosure and simplifying the description, rather than indicating or implying that related devices or elements have to be in the specific orientation, or configured or operated in a specific orientation, therefore, they should not be construed as limitations on the present disclosure. Besides, terms "first", "second" and "third" are merely for descriptive purpose, but should not be construed as indicating or implying importance in relativity.

Finally, it should be noted that the above-mentioned embodiments are only specific embodiments of the present disclosure, and are used to illustrate the technical solutions of the present disclosure, rather than restricting them, and the protection scope of the present disclosure is not limited thereto. Although the present disclosure has been described in detail with reference to the foregoing embodiments, those ordinarily skilled in the art should understand that: any person who is familiar with the technical field can still modify or easily think of changes to the technical solutions described in the foregoing embodiments, or perform equivalent replacements on some technical features therein within the technical scope disclosed by the present disclosure; however, these modifications, changes or substitutions do not make the essence of the corresponding technical solutions deviate from the spirit and scope of the technical solutions of the embodiments of the present disclosure, and should be included within the protection scope of the present disclosure. Therefore, the protection scope of the present disclosure should be based on the protection scope of the claims.

## Claims

1. A high-voltage point control lamp string, **characterized by** comprising a bracket (000), and a plurality of lamp beads (10) provided on the bracket (000),
wherein the bracket (000) comprises a main line bracket (001) and a lamp string bracket (002);
the main line bracket (001) is provided with a power supply main line (011) and a signal main line (012);
the lamp string bracket (002) is configured to fix the plurality of lamp beads (10), and the power supply main line (011) is configured to supply power to the plurality of lamp beads (10); and
a lamp body of each of the lamp beads (10) is provided with a signal line (021), and each of the lamp beads (10) is connected to the signal main line (012) through the signal line (021), so as to control a light-up state through a control signal of the signal main line (012).

2. The high-voltage point control lamp string according to claim 1, wherein the plurality of lamp beads (10) comprise a plurality of first lamp beads (11) and a plurality of second lamp beads (12);
positive and negative pins of the first lamp beads (11) and the second lamp beads (12) are in opposite positions;
the plurality of first lamp beads (11) and the plurality of second lamp beads (12) are alternately provided on the lamp string bracket (002) in sequence.

3. The high-voltage point control lamp string according to claim 1, wherein the power supply main line (011) comprises a positive power supply main line (013) and a grounded main line (014).

4. The high-voltage point control lamp string according to claim 3, wherein the lamp string bracket (002) is provided with a plurality of bonding pads connected in sequence, and the bonding pads are configured to be welded with the lamp beads (10),
wherein a center of each of the bonding pads is provided with a signal point (003), and the signal point (003) is configured to be connected with a signal line (021) of a corresponding lamp bead (10) in a contact manner.

5. The high-voltage point control lamp string according to claim 4, wherein each of the bonding pads comprises a positive welding spot (004) connected to the positive power supply main line (013), and a negative welding spot (005) connected to the grounded main line (014); and the positive welding spot (004) and the negative welding spot (005) are arranged in a preset manner.

6. The high-voltage point control lamp string according to claim 3, wherein the lamp string bracket (002) comprises a first substrate (201) and a second substrate (202), and both the first substrate (201) and the second substrate (202) are connected to a frame body of the lamp string bracket (002); an end of the first substrate (201) protrudes from the frame body to form a positive pin, and an end of the second substrate (202) protrudes from the frame body to form a negative pin; or the end of the first substrate (201) protrudes from the frame body to form the negative pin, and the end of the second substrate (202) protrudes from the frame body to form the positive pin.

7. The high-voltage point control lamp string according to claim 6, wherein the high-voltage point control lamp string further comprises a transcoding circuit board (400), and the first substrate (201) and the second substrate (202) are connected with the power supply main line (011) and the signal main line (012) through the transcoding circuit board (400).

8. The high-voltage point control lamp string according to claim 7, wherein the plurality of lamp beads (10) fixed on the lamp string bracket (002) are connected in series through the first substrate (201) and the second substrate (202).

9. The high-voltage point control lamp string according to claim 1, wherein the lamp string is a four-wire high-voltage point control lamp string.

10. A window curtain structure, **characterized in that** the window curtain structure comprises a plurality of high-voltage point control lamp strings according to any one of claims 1-9, and the plurality of high-voltage point control lamp strings are connected with each other.
